# EUROPÄISCHE PATENTANMELDUNG

(11) **EP 3 059 207 A1**
(43) Veröffentlichungstag der Anmeldung: **24.08.2016**
(21) Anmeldenummer: 16000119.4
(22) Anmeldetag: 19.01.2016
(51) Int. Cl.: C01B 3/34

(54) **VERFAHREN UND VORRICHTUNG ZUR SYNTHESEGASERZEUGUNG**

(30) Priorität: 19.02.2015 DE 102015002162
(71) Anmelder: Linde Aktiengesellschaft, 80331 München (DE)
(72) Erfinder: Schwarzhuber, Josef, 85283 Wolnzach (DE); Maier, Alexander, 83607 Holzkirchen (DE)
(74) Vertreter: Fischer, Werner

(57) **Zusammenfassung**

Die Erfindung betrifft ein Verfahren sowie eine Vorrichtung zur Erzeugung eines Syntheserohgases (1) aus einem Kohlenwasserstoffe enthaltenden Einsatz (2), der bei einem ersten Druck vorliegt, sowie einem Dampfeinsatz (3), der bei einem zweiten Druck vorliegt, der höher ist als der erste Druck, wobei der Kohlenwasserstoffe enthaltende Einsatz (2) und der Dampfeinsatz (3) gemeinsam in einen Reaktor (R) eingeleitet und dort bei einem Prozessdruck, der höher ist als der erste Druck, zu dem Syntheserohgas (1) umgesetzt werden. Kennzeichnend hierbei ist, dass der Druck zumindest eines Teils des Kohlenwasserstoffe enthaltenden Einsatzes (2) vor dessen Einleitung in den Reaktor (R) mit Hilfe einer Dampfstrahlpumpe (P) erhöht wird, der zumindest ein Teil des Dampfeinsatzes (3) als Treibmedium zugeführt wird.

## Beschreibung

Die Erfindung betrifft ein Verfahren zur Erzeugung eines Syntheserohgases aus einem Kohlenwasserstoffe enthaltenden Einsatz, der bei einem ersten Druck vorliegt, sowie einem Dampfeinsatz, der bei einem zweiten Druck vorliegt, der höher ist als der erste Druck, wobei der Kohlenwasserstoffe enthaltende Einsatz und der Dampfeinsatz gemeinsam in einen Reaktor eingeleitet und dort bei einem Prozessdruck, der höher ist als der erste Druck, zu dem Syntheserohgas umgesetzt werden.

Weiterhin betrifft die Erfindung eine Vorrichtung zur Durchführung des erfindungsgemäßen Verfahrens.

Unter einem Syntheserohgas ist ein in erster Linie durch Dampf- oder Autothermalreformierung aus Kohlenwasserstoffen gewonnenes Stoffgemisch zu verstehen, das zu einem großen Teil aus Wasserstoff und Kohlenmonoxid besteht, daneben aber auch Stoffe wie Wasser, Kohlendioxid und Schwefelverbindungen in erheblichen Mengen aufweist. Durch chemische und/oder physikalische Behandlungsschritte können aus dem Syntheserohgas Wasserstoff, Kohlenmonoxid oder Synthesegas - ein Stoffgemisch, das Wasserstoff und Kohlenmonoxid in einem definierten Verhältnis umfasst - als Produkte gewonnen werden, die in einer Vielzahl von industriellen Prozessen als Basischemikalien Verwendung finden. So wird etwa Synthesegas zur Herstellung von Methanol, Dimethylether oder Kohlenwasserstoffen eingesetzt.

Bei Verfahren der eingangs beschriebenen Art ist es erforderlich, zumindest den Kohlenwasserstoffe enthaltenden Einsatz zu verdichten, um ihn in den Reaktor einleiten zu können. Hierzu werden nach dem Stand der Technik Maschinen wie Schrauben-, Kolben- oder Turboverdichter verwendet, die kompliziert aufgebaut und wegen der großen Anzahl ihrer beweglichen Teile auch verschleiß- und störanfällig sind. Für diese Maschinen ergeben sich daher hohe Investitions- und Betriebskosten, die einen erheblichen Einfluss auf die Wirtschaftlichkeit der Syntheserohgaserzeugung haben.

Aufgabe der vorliegenden Erfindung ist es, ein Verfahren sowie eine Vorrichtung der gattungsgemäßen Art anzugeben, durch die die beschriebenen Nachteile des Standes der Technik überwunden werden.

Die gestellte Aufgabe wird verfahrensseitig erfindungsgemäß dadurch gelöst, dass der Druck zumindest eines Teils des Kohlenwasserstoffe enthaltenden Einsatzes vor dessen Einleitung in den Reaktor mit Hilfe einer Dampfstrahlpumpe erhöht wird, der zumindest ein Teil des Dampfeinsatzes als Treibmedium zugeführt wird.

Durch das vorgeschlagene Verfahren ist es möglich, zur Verdichtung des Kohlenwasserstoffe enthaltenden Einsatzes völlig auf komplizierte und teuere Maschinen zu verzichten oder zumindest kleinere und damit kostengünstigere Maschinen einzusetzen. Dampfstrahlpumpen sind seit vielen Jahren Stand der Technik und dem Fachmann bekannt. Sie weisen einen relativ einfachen Aufbau ohne bewegliche Teile auf und sind robust, so dass sie zu deutlich geringeren Kosten eingesetzt werden können, als die nach dem Stand der Technik zur Verdichtung des Kohlenwasserstoffe enthaltenden Einsatzes verwendeten Maschinen.

In der Treibdüse der Dampfstrahlpumpe wird Druckenergie des als Treibmedium eingesetzten Teils des Dampfeinsatzes in Geschwindigkeitsenergie umgewandelt, so dass ein Dampfstrahl entsteht, dessen statischer Druck geringer ist als der erste Druck des Kohlenwasserstoffe enthaltenden Einsatzes. Durch den aus der Treibdüse austretenden Dampfstrahl kann der Kohlenwasserstoffe enthaltende Einsatz daher angesaugt und beschleunigt werden. In dem sich an die Treibdüse anschließenden Einlaufkonus des Diffusors mischen sich Dampf und Kohlenwasserstoffe enthaltender Einsatz, bevor sie im Diffusor wieder abgebremst werden. Da durch die Abbremsung Druckenergie zurückgewonnen wird, verlässt der Kohlenwasserstoffe enthaltende Einsatz die Dampfstrahlpumpe zusammen mit dem als Treibmedium eingesetzten Teil des Dampfeinsatzes mit einem höheren als dem ersten Druck.

Vorzugsweise wird der Druck des zumindest einen Teils des Kohlenwasserstoffe enthaltenden Einsatzes mit Hilfe der Dampfstrahlpumpe auf einen Wert erhöht, der es erlaubt, den zumindest einen Teil des Kohlenwasserstoffe enthaltenden Einsatzes ohne weitere Verdichtung in den Reaktor einzuleiten.

Bevorzugt wird die Gesamtmenge des Kohlenwasserstoffe enthaltenden Einsatzes mittels einer Dampfstrahlpumpe verdichtet, wozu zweckmäßigerweise auch die Gesamtmenge des Dampfeinsatzes als Treibmedium verwendet wird. Denkbar ist jedoch auch, den Kohlenwasserstoffe enthaltenden Einsatz in zwei oder mehr Teilströme aufzuteilen und diese getrennt voneinander in parallel betriebenen Dampfstrahlpumpen zu verdichten, wobei vorzugsweise in jeder der Dampfstrahlpumpen ein Teil und in allen Dampfstrahlpumpen zusammen die Gesamtmenge des Dampfeinsatzes als Treibmedium eingesetzt wird. Da eine Dampfstrahlpumpe auch als Mischeinrichtung wirkt, liegen auf diese Weise die beiden Einsätze nach der Druckerhöhung vollständig in einer Mischung vor, so dass auf eine weitere Mischeinrichtung stromabwärts der Dampfstrahlpumpe bzw. der Dampfstrahlpumpen verzichtet werden kann.

Falls der Druck des Dampfeinsatzes nicht ausreicht, um den Kohlenwasserstoffe enthaltenden Einsatz auf einen für die Einleitung in den Reaktor notwendigen Druck zu verdichten, so sieht eine Ausgestaltung des erfindungsgemäßen Verfahrens vor, zumindest den Druck des als Treibmedium vorgesehenen Teils des Dampfeinsatzes vor dessen Einleitung in die Dampfstrahlpumpe auf einen Wert zu erhöhen, der ausreichend ist, den Druck des Kohlenwasserstoff enthaltenden Einsatzes auf einen für die Einleitung in den Reaktor ausreichenden Wert anzuheben. Vorzugsweise erfolgt diese Erhöhung durch ein Anheben des Betriebsdrucks des Dampfsystems.

Unter Umständen kann es sinnvoll sein, den Kohlenwasserstoffe enthaltenden Einsatz in zwei oder mehr aufeinander folgenden Stufen zu verdichten, wobei zumindest in zwei der Stufen eine Dampfstrahlpumpe eingesetzt wird. In einer der Dampfstrahlpumpen wird dabei ein Teil des Dampfeinsatzes mit dem zweiten Druck als Treibmedium verwendet, während in der oder den weiteren Dampfstrahlpumpen jeweils ein Teil des Dampfeinsatzes als Treibmedium eingesetzt wird, dessen Druck auf einen Wert oberhalb des zweiten Drucks angehoben wurde.

Der Dampfeinsatz kann aus einer Quelle oder aus mehren Quellen bezogen werden. So ist es beispielsweise möglich, alleine Importdampf als Dampfeinsatz zu nutzen oder aber den Dampfeinsatz etwa aus Importdampf, Prozessdampf und Exportdampf zu mischen.

Weiterhin betrifft die Erfindung eine Vorrichtung zur Erzeugung eines Syntheserohgases mit einem Reaktor, Zuführeinrichtungen für einen Kohlenwasserstoffe enthaltenden Einsatz und einen Dampfeinsatz sowie einer Verdichtungseinrichtung zur Anhebung des Drucks des Kohlenwasserstoffe enthaltenden Einsatzes, die austrittsseitig mit dem Reaktor verbunden ist.

Die gestellte Aufgabe wird vorrichtungsseitig erfindungsgemäß dadurch gelöst, dass die Verdichtungseinrichtung eine Dampfstrahlpumpe umfasst, die mit der Zuführeinrichtung für den Dampfeinsatz verbunden ist, so dass ihr zumindest ein Teil des Dampfeinsatzes als Treibmedium zuführbar ist.

Vorzugsweise besteht die Verdichtungseinrichtung aus genau einer Dampfstrahlpumpe, mit deren Hilfe die Gesamtmenge des Kohlenwasserstoffe enthaltenden Einsatzes auf einen für dessen Einleitung in den Reaktor ausreichend hohen Druck verdichtet werden kann. Die Verdichtungseinrichtung kann jedoch auch zwei oder mehr parallel und/oder seriell angeordnete Dampfstrahlpumpen umfassen.

Bei dem Reaktor handelt es sich vorzugsweise um einen Dampfreformer oder einen Autothermalreformer oder einen anderen Reaktor, der geeignet ist, um aus Kohlenwasserstoffen und Dampf ein Syntheserohgas zu erzeugen.

Mit besonderem Vorteil kann die Erfindung dann eingesetzt werden, wenn der Druck des Kohlenwasserstoff enthaltenden Einsatzgases zeitlichen Schwankungen unterworfen ist, so dass es Zeiten gibt, in denen eine Verdichtung des Einsatzes erforderlich ist und solche, in denen der Einsatz ohne Verdichtung dem Reaktor zugeführt werden kann. Insbesondere dann, wenn die Schwankungen schnell erfolgen und nicht vorhersagbar sind, müsste eine für die ggf. erforderliche Verdichtung des Kohlenwasserstoffe enthaltenden Einsatzes einsetzbare Maschine ständig, d.h. auch in Zeiten ausreichenden hohen Drucks, laufen, da andernfalls die Gefahr bestünde, dass die Maschine bei abfallendem Druck nicht rasch genug gestartet werden kann, um den Druck des Kohlenwasserstoffe enthaltenden Einsatzes ohne Unterbrechung auf dem erforderlichen Druckniveäu zu halten. Dagegen kann eine Dampfstrahlpumpe in einem derartigen Fall ohne Zeitverzug, vor allem aber ohne Eingriff des Bedienpersonals für die notwendige Verdichtung des Kohlenwasserstoffe enthaltenden Einsatzes sorgen. Dies wird dadurch gewährleistet, dass die Dampfstrahlpumpe permanent durchströmt wird und dadurch in jedem Fall eine auslegungsgemäße Druckerhöhung erzielt wird. Im Fall einer zu starken Druckerhöhung wird das Einsatzgas/Dampf Gemisch mit Hilfe eines Regelventils auf den erforderlichen Druck entspannt.

Auch dann, wenn nach einem Umbau einer bestehenden Anlage der Druck des Kohlenstoffe enthaltenden Einsatzes nicht mehr ausreichend hoch ist, kann die Verdichtung des Einsatzes mittels einer Dampfstrahlpumpe eine günstige Alternative zur Installation von Verdichtermaschinen sein.

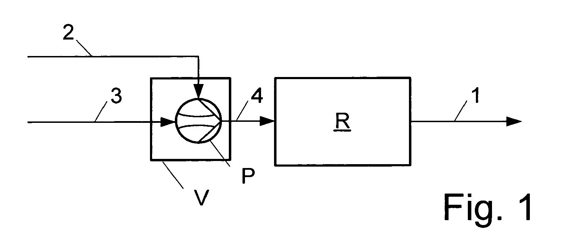

Im Folgenden soll die Erfindung anhand eines in der Figur 1 schematisch dargestellten Ausführungsbeispiels näher erläutert werden.

Die Figur 1 zeigt eine bevorzugte Ausführung des erfindungsgemäßen Verfahrens bzw. der erfindungsgemäßen Vorrichtung zur Erzeugung eines Syntheserohgases.

Im Reaktor R, bei dem es sich beispielsweise um einen Dampf- oder einen Autothermalreformer handelt, werden Kohlenwasserstoffe mit Wasserdampf zu einem Syntheserohgas 1 umgesetzt. Hierzu werden über eine erste Zuführeinrichtung ein Kohlenwasserstoffe enthaltender Einsatz 2, wie etwa Erdgas, und über eine zweite Zuführeinrichtung ein Dampfeinsatz 3 herangeführt. Der Druck des Kohlenwasserstoffe enthaltenden Einsatzes 2 in der ersten Zuführeinrichtung, der typischerweise zwischen 15 und 30bar(a) liegt, ist geringer als der Prozessdruck, bei dem seine Umsetzung zu Syntheserohgas erfolgt, so dass es erforderlich ist, den Druck des Kohlenwasserstoffe enthaltenden Einsatzes zu erhöhen, um ihn dem Reaktor R zuführen zu können. Hierzu ist die erste Zuführeinrichtung mit der als Dampfstrahlpumpe (P) ausgeführten Verdichtungseinrichtung V verbunden, der als Treibmedium der Dampfeinsatz 3 zugeführt wird. Aufgrund des Massenstroms und des Drucks des Dampfeinsatzes 3, der mit einem Wert zwischen 40 und 120bar(a) deutlich größer ist als der Prozessdruck, der gewöhnlich zwischen 25 und 40bar(a) liegt, kann das in der Dampfstrahlpumpe gebildete, Kohlenwasserstoffe und Wasserdampf enthaltende Stoffgemisch ohne einen weiteren Verdichtungsschritt dem Reaktor R über die Leitung 4 zugeführt werden.

## Patentansprüche

1. Verfahren zur Erzeugung eines Syntheserohgases (1) aus einem Kohlenwasserstoffe enthaltenden Einsatz (2), der bei einem ersten Druck vorliegt, sowie einem Dampfeinsatz (3), der bei einem zweiten Druck vorliegt, der höher ist als der erste Druck, wobei der Kohlenwasserstoffe enthaltende Einsatz (2) und der Dampfeinsatz (3) gemeinsam in einen Reaktor (R) eingeleitet und dort bei einem Prozessdruck, der höher ist als der erste Druck, zu dem Syntheserohgas (1) umgesetzt werden, **dadurch gekennzeichnet, dass** der Druck zumindest eines Teils des Kohlenwasserstoffe enthaltenden Einsatzes (2) vor dessen Einleitung in den Reaktor (R) mit Hilfe einer Dampfstrahlpumpe (P) erhöht wird, der zumindest ein Teil des Dampfeinsatzes (3) als Treibmedium zugeführt wird.

2. Verfahren nach Anspruch 1, **dadurch gekennzeichnet, dass** der Druck des zumindest einen Teils des Kohlenwasserstoffe enthaltenden Einsatzes (2) mit Hilfe der Dampfstrahlpumpe (P) auf einen Wert erhöht wird, der es erlaubt, den Kohlenwasserstoffe enthaltenden Einsatz ohne weitere Verdichtung in den Reaktor (R) einzuleiten.

3. Verfahren nach einem der Ansprüche 1 oder 2, **dadurch gekennzeichnet, dass** die Gesamtmenge des Kohlenwasserstoffe enthaltenden Einsatzes (2) mittels einer Dampfstrahlpumpe (P) verdichtet wird

4. Verfahren nach einem der Ansprüche 1 bis 3, **dadurch gekennzeichnet, dass** die Gesamtmenge des Dampfeinsatzes (3) als Treibmedium verwendet wird.

5. Verfahren nach einem der Ansprüche 1 bis 4, **dadurch gekennzeichnet, dass** zumindest der Druck des als Treibmedium vorgesehenen Teils des Dampfeinsatzes (3) vor dessen Einleitung in die Dampfstrahlpumpe (P) auf einen Wert erhöht wird, der ausreichend ist, den Druck des Kohlenwasserstoff enthaltenden Einsatz (2) auf einen für die Einleitung in den Reaktor (R) ausreichenden Wert anzuheben.

6. Verfahren nach einem der Ansprüche 1 bis 5, **dadurch gekennzeichnet, dass** Dampfeinsatz (3) aus verschieden Quellen bezogen wird.

7. Vorrichtung zur Erzeugung eines Syntheserohgases (1) mit einem Reaktor (R), Zuführeinrichtungen für einen Kohlenwasserstoffe enthaltenden Einsatz (2) und einen Dampfeinsatz (3) sowie einer Verdichtungseinrichtung (V) zur Anhebung des Drucks des Kohlenwasserstoffe enthaltenden Einsatzes (2), die austrittseitig mit dem Reaktor (R) verbunden ist, **dadurch gekennzeichnet, dass** die Verdichtungseinrichtung eine Dampfstrahlpumpe (P) umfasst, die mit der Zuführeinrichtung für den Dampfeinsatz (3) verbunden ist, so dass ihr zumindest ein Teil des Dampfeinsatzes (3) als Treibmedium zuführbar ist.

8. Vorrichtung nach Anspruch 7, **dadurch gekennzeichnet, dass** die Verdichtungseinrichtung (V) aus genau einer Dampfstrahlpumpe (P) besteht, mit deren Hilfe die Gesamtmenge des Kohlenwasserstoffe enthaltenden Einsatzes (2) auf einen für dessen Einleitung in den Reaktor (R) ausreichend hohen Druck verdichtet werden kann.
